# EUROPÄISCHE PATENTSCHRIFT

(11) **EP 3 184 999 B1**
(45) Veröffentlichungstag und Bekanntmachung des Hinweises auf die Patenterteilung: **30.09.2020**
(21) Anmeldenummer: 16205237.7
(22) Anmeldetag: 20.12.2016
(51) Int. Cl.: G01N 21/956

(54) **INSPEKTIONSVORRICHTUNG UND VERFAHREN ZUM VERIFIZIEREN EINER KLEBSTOFFVERBINDUNG**
INSPECTION DEVICE AND METHOD FOR VERIFYING AN ADHESIVE CONNECTION
DISPOSITIF D'INSPECTION ET PROCÉDÉ DE VÉRIFICATION D'UN COMPOSÉ ADHÉSIF

(30) Priorität: 23.12.2015 DE 102015122733
(43) Veröffentlichungstag der Anmeldung: 28.06.2017
(73) Patentinhaber: Bundesdruckerei GmbH, 10969 Berlin (DE)
(72) Erfinder: FERBER, Alexander, 12105 Berlin (DE); KLOESER, Joachim, 10779 Berlin (DE); ROSSEK, Kai, 12349 Berlin (DE); MUTH, Oliver, 12277 Berlin (DE)
(74) Vertreter: Patentship Patentanwaltsgesellschaft mbH

(56) Entgegenhaltungen:
- DE-A1-102012 112 726
- JP-A- S60 171 441
- JP-A- 2003 004 660

## Beschreibung

Die vorliegende Erfindung betrifft eine Inspektionsvorrichtung und ein Verfahren zum Verifizieren einer durch eine Klebstoffschicht ausgebildeten Klebstoffverbindung zwischen einem elektronischen Schaltkreis und einem Kartenkörper einer Chipkarte.

Die Offenlegungsschrift DE 10 2012 112 726 A1 zeigt Inlay umfassend eine Trägerfolie. Das Inlay kann für die Weiterverarbeitung zu einem Wert- oder Sicherheitsdokument vorgesehen sein.

Die Offenlegungsschrift JP 2003 004 660 A beschreibt ein Inspektionsverfahren zum Inspizieren einer Klebstoffverbindung zwischen einem Halbleiterchip und einer Leiterplatte.

Moderne elektronische Identifikationsdokumente, beispielsweise der elektronische Personalausweis, sind in Form einer Chipkarte ausgebildet. Ferner können Chipkarten als Kreditkarten, Bankkarten, elektronische Börsen usw. ausgebildet sein und zur bargeldlosen Abwicklung von Transaktionen, wie beispielsweise zum Entrichten eines Beförderungsentgelts im Personennahverkehr oder zum Bezahlen eines Kaufpreises für eine Ware oder Dienstleistung, dienen.

Eine Chipkarte umfasst in der Regel einen Kartenkörper und einen in den Kartenkörper integrierten elektronischen Schaltkreis, auch Chipmodul genannt, der zur Speicherung, Verarbeitung und/oder Erkennung von Informationen ausgebildet ist, die kontaktlos und/oder kontaktbehaftet mit einem Lesegerät ausgetauscht werden können.

Im Rahmen der Herstellung einer Chipkarte kann der elektronische Schaltkreis, beispielsweise in Form eines Chipmoduls oder aber eines nackten bzw. ungehausten Chips (engl. "bare die"), mittels einer durch eine Klebstoffschicht ausgebildeten Klebstoffverbindung an einer dafür vorgesehenen Stelle des Kartenkörpers befestigt werden. Hierfür kann in dem Kartenkörper eine Ausnehmung vorgesehen sein. Zur Fertigstellung einer Chipkarte kann das aus Kartenkörper und elektronischem Schaltkreis bestehende Chipkartenhalbzeug mit einer oder mehreren Folie laminiert werden, um den elektronischen Schaltkreis in dem Kartenkörper einzubetten.

Bei der Befestigung des elektronischen Schaltkreises an dem Kartenkörper mittels einer Klebstoffschicht muss insbesondere auf zwei Dinge geachtet werden. Zum einen sollte sichergestellt werden, dass der elektronische Schaltkreis so auf dem Kartenkörper angeordnet ist, dass Kontaktanschlüsse des elektronische Schaltkreises in dessen Randbereich mit entsprechenden Kontaktanschlüssen des Kartenkörpers elektrisch verbunden sind, die beispielsweise Teil einer im Kartenkörper ausgebildeten Antennenstruktur sein können. Zum anderen sollte sichergestellt werden, dass die durch die Klebstoffschicht ausgebildete Klebstoffverbindung zwischen dem elektronischen Schaltkreis und dem Kartenkörper keine Mängel aufweist, die dazu führen könnten, dass sich unter den normalen Einflüssen, denen eine Chipkarte beim Einsatz im Feld ausgesetzt ist, der elektronische Schaltkreis vom Kartenkörper löst und dadurch die elektrischen Verbindungen zwischen den Kontaktanschlüssen des elektronischen Schaltkreises und den Kontaktanschlüssen im Kartenkörper unterbrochen werden, was die Chipkarte unbrauchbar machen würde.

Es ist daher die Aufgabe der vorliegenden Erfindung, ein Konzept zur Verifizierung einer durch eine Klebstoffschicht ausgebildeten Klebstoffverbindung zwischen einem elektronischen Schaltkreis und einem Kartenkörper einer Chipkarte zu schaffen.

Diese Aufgabe wird durch die Merkmale der unabhängigen Ansprüche gelöst. Vorteilhafte Ausbildungsformen sind Gegenstand der abhängigen Patentansprüche, der Beschreibung sowie der Figuren.

Gemäß einem ersten Aspekt betrifft die Erfindung eine Inspektionsvorrichtung zum Verifizieren einer durch eine Klebstoffschicht ausgebildeten Klebstoffverbindung zwischen einem elektronischen Schaltkreis und einem Kartenkörper. Die Inspektionsvorrichtung umfasst eine Beleuchtungsquelle, welche ausgebildet ist, den Kartenkörper zu beleuchten, eine Bildkamera, welche ausgebildet ist, eine Bildaufnahme des beleuchteten Kartenkörpers mit dem elektronischen Schaltkreis zu erfassen, und einen Prozessor, welcher ausgebildet ist, in der erfassten Bildaufnahme einen Verlauf der Klebstoffschicht entlang einer Kontur des elektronischen Schaltkreises zu erfassen und die Klebstoffverbindung anhand des erfassten Verlaufs der Klebstoffschicht zu verifizieren. Dadurch wird ein effizientes Konzept zur Verifizierung einer durch eine Klebstoffschicht ausgebildeten Klebstoffverbindung zwischen einem elektronischen Schaltkreis und einem Kartenkörper einer Chipkarte geschaffen.

Gemäß einer Ausführungsform ist der Prozessor ausgebildet, die Kontur des elektronischen Schaltkreises, insbesondere durch Kantenerkennung oder Mustererkennung, zu erfassen. Dadurch wird beispielsweise der Vorteil erreicht, dass der Verlauf der Klebstoffschicht entlang einer Kontur des elektronischen Schaltkreises effizienter bestimmt werden kann.

Gemäß einer Ausführungsform ist der Prozessor ausgebildet, innerhalb eines Intensitätsbereichs, insbesondere Graustufenbereichs, liegende Bildpixel entlang der Kontur des elektronischen Schaltkreises in der Bildaufnahme zu erfassen, um den Verlauf der Klebstoffschicht zu erfassen. Dadurch wird beispielsweise der Vorteil erreicht, dass der Verlauf der Klebstoffschicht entlang einer Kontur des elektronischen Schaltkreises effizienter bestimmt werden kann.

Erfindungsgemäß ist der Prozessor ausgebildet, in dem Verlauf der Klebstoffschicht entlang der Kontur des elektronischen Schaltkreises einen geschlossenen Pfad zu detektieren, und die durch die Klebstoffschicht ausgebildete Klebstoffverbindung bei Vorliegen des geschlossenen Pfades zu verifizieren, oder die durch die Klebstoffschicht ausgebildete Klebstoffverbindung bei Fehlen des geschlossenen Pfades nicht zu verifizieren. Dadurch wird beispielsweise der Vorteil erreicht, dass ein leicht automatisiert zu überprüfendes Kriterium für die Güte der Klebstoffverbindung bereitgestellt wird.

Gemäß einer Ausführungsform ist der Prozessor ausgebildet, in dem Verlauf der Klebstoffschicht entlang der Kontur des elektronischen Schaltkreises einen geschlossenen Pfad in einem vorbestimmten Abstand zur Kontur des elektronischen Schaltkreises zu detektieren. Dadurch wird beispielsweise der Vorteil erreicht, dass ein leicht automatisiert zu überprüfendes Kriterium für die Güte der Klebstoffverbindung bereitgestellt wird.

Erfindungsgemäß ist die Bildkamera ausgebildet, die Bildaufnahme zu überbelichten, um die Klebstoffschicht in einem vorbestimmten Intensitätsbereich, insbesondere Graustufenbereich, aufzunehmen. Dadurch wird beispielsweise der Vorteil erreicht, dass die Analyse und/oder Verarbeitung der Bildaufnahme durch den Prozessor effizienter durchgeführt werden kann.

Gemäß einer Ausführungsform ist die Beleuchtungsquelle ausgebildet, den Kartenkörper mit Licht einer vorbestimmten Intensität zu überbelichten, um eine Aufnahme der Klebstoffschicht in einem vorbestimmten Intensitätsbereich, insbesondere Graustufenbereich, durch die Bildkamera zu bewirken. Dadurch wird beispielsweise der Vorteil erreicht, dass die Analyse und/oder Verarbeitung der Bildaufnahme durch den Prozessor effizienter durchgeführt werden kann.

Gemäß einem zweiten Aspekt betrifft die Erfindung ein Verfahren zum Verifizieren einer durch eine Klebstoffschicht ausgebildeten Klebstoffverbindung zwischen einem elektronischen Schaltkreis und einem Kartenkörper. Dabei umfasst das Verfahren die folgenden Schritte: das Beleuchten des Kartenkörpers mittels einer Beleuchtungsquelle; das Erfassen einer Bildaufnahme des beleuchteten Kartenkörpers mit dem elektronischen Schaltkreis mittels einer Bildkamera; das Erfassen eines Verlaufs der Klebstoffschicht entlang einer Kontur des elektronischen Schaltkreises in der erfassten Bildaufnahme; und das Verifizieren der Klebstoffverbindung anhand des erfassten Verlaufs der Klebstoffschicht. Dadurch wird ein effizientes Konzept zur Verifizierung einer durch eine Klebstoffschicht ausgebildeten Klebstoffverbindung zwischen einem elektronischen Schaltkreis und einem Kartenkörper einer Chipkarte geschaffen.

Gemäß einer Ausführungsform umfasst das Verfahren ferner den Schritt des Erfassens der Kontur des elektronischen Schaltkreises in der Bildaufnahme, insbesondere durch Kantenerkennung oder Mustererkennung. Dadurch wird beispielsweise der Vorteil erreicht, dass der Verlauf der Klebstoffschicht entlang einer Kontur des elektronischen Schaltkreises effizienter bestimmt werden kann.

Gemäß einer Ausführungsform umfasst der Schritt des Erfassens des Verlaufs der Klebstoffschicht das Erfassen von innerhalb eines Intensitätsbereichs, insbesondere Graustufenbereichs, liegenden Bildpixeln in der Bildaufnahme entlang der Kontur des elektronischen Schaltkreises. Dadurch wird beispielsweise der Vorteil erreicht, dass der Verlauf der Klebstoffschicht entlang einer Kontur des elektronischen Schaltkreises effizienter bestimmt werden kann.

Erfindungsgemäß umfasst das Verfahren ferner die Schritte, in dem Verlauf der Klebstoffschicht entlang der Kontur des elektronischen Schaltkreises in der Bildaufnahme einen geschlossenen Pfad zu detektieren, und die durch die Klebstoffschicht ausgebildete Klebstoffverbindung bei Vorliegen des geschlossenen Pfades zu verifizieren, oder die durch die Klebstoffschicht ausgebildete Klebstoffverbindung bei Fehlen des geschlossenen Pfades nicht zu verifizieren. Dadurch wird beispielsweise der Vorteil erreicht, dass ein leicht automatisiert zu überprüfendes Kriterium für die Güte der Klebstoffverbindung bereitgestellt wird.

Gemäß einer Ausführungsform wird beim Schritt des Detektierens eines geschlossenen Pfades in dem Verlauf der Klebstoffschicht entlang der Kontur des elektronischen Schaltkreises der geschlossene Pfad in dem Verlauf der Klebstoffschicht entlang der Kontur des elektronischen Schaltkreises in einem vorbestimmten Abstand zur Kontur des elektronischen Schaltkreises detektiert. Dadurch wird beispielsweise der Vorteil erreicht, dass ein leicht automatisiert zu überprüfendes Kriterium für die Güte der Klebstoffverbindung bereitgestellt wird.

Erfindungsgemäß umfasst der Schritt des Erfassens einer Bildaufnahme des beleuchteten Kartenkörpers mit dem elektronischen Schaltkreis mittels der Bildkamera das Überbelichten der Bildaufnahme, um die Klebstoffschicht in einem vorbestimmten Intensitätsbereich, insbesondere Graustufenbereich, aufzunehmen. Dadurch wird beispielsweise der Vorteil erreicht, dass die Analyse und/der Verarbeitung der Bildaufnahme durch den Prozessor effizienter durchgeführt werden kann.

Gemäß einer Ausführungsform umfasst der Schritt des Beleuchtens des Kartenkörpers mittels der Beleuchtungsquelle das Überbelichten des Kartenkörpers mit Licht einer vorbestimmten Intensität, um eine Aufnahme der Klebstoffschicht in einem vorbestimmten Intensitätsbereich, insbesondere Graustufenbereich, durch die Bildkamera zu bewirken. Dadurch wird beispielsweise der Vorteil erreicht, dass die Analyse und/oder Verarbeitung der Bildaufnahme durch den Prozessor effizienter durchgeführt werden kann.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm einer Inspektionsvorrichtung zum Verifizieren einer durch eine Klebstoffschicht ausgebildeten Klebstoffverbindung zwischen einem elektronischen Schaltkreis und einem Kartenkörper gemäß einer Ausführungsform;
- Fig. 2: ein schematisches Diagramm einer Chipkarte mit einem elektronischen Schaltkreis und einem Kartenkörper, welche über eine Klebstoffverbindung miteinander verbunden sind, die mittels der Inspektionsvorrichtung von Figur 1 verifiziert werden kann;
- Fig. 3a, b: schematische Diagramme zweier beispielhafter Bildaufnahmen, die mit der Inspektionsvorrichtung von Figur 1 gewonnen, analysiert und verarbeitet werden können; und
- Fig. 4: ein Diagramm mit den Schritten eines Verfahrens zum Verifizieren einer durch eine Klebstoffschicht ausgebildeten Klebstoffverbindung zwischen einem elektronischen Schaltkreis und einem Kartenkörper gemäß einer Ausführungsform.

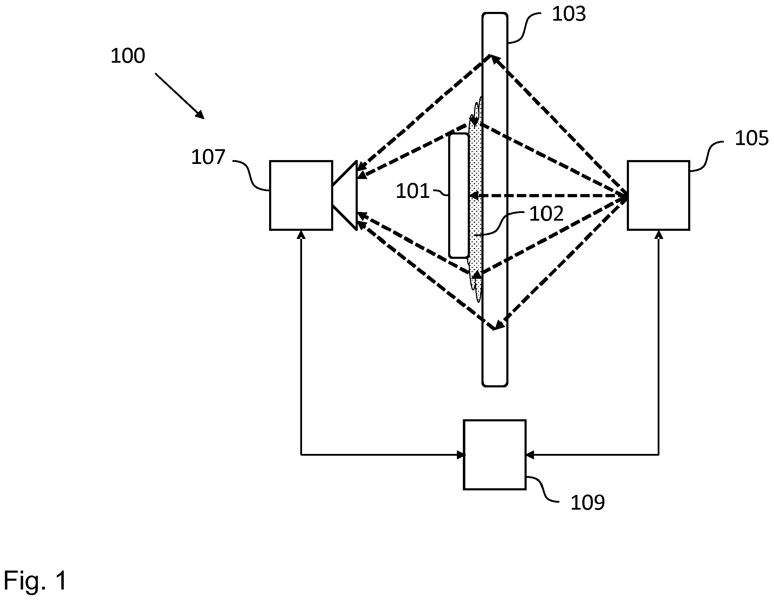

Figur 1 zeigt ein Diagramm in Form einer schematischen Seitenansicht einer Inspektionsvorrichtung 100 zum Verifizieren einer durch eine Klebstoffschicht 102 ausgebildeten Klebstoffverbindung zwischen einem elektronischen Schaltkreis 101, insbesondere einem Chipmodul bzw. einem Chip 101, und einem Kartenkörper 103 gemäß einer Ausführungsform. Gemäß einer Ausführungsform besteht der Kartenkörper aus einem Kunststoffmaterial, insbesondere aus PC, PVC, ABS oder PET.

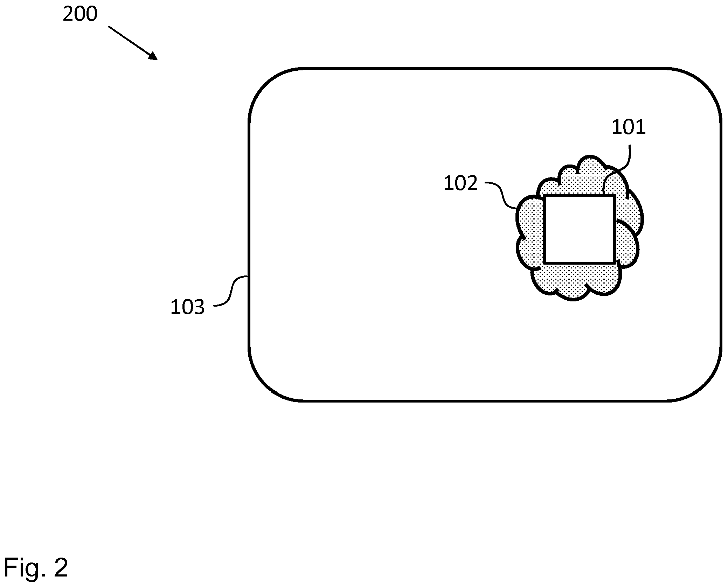

In Figur 1 ist eine schematische Seitenansicht des elektronischen Schaltkreises 101 und des Kartenkörpers 103 dargestellt, die durch die Klebstoffverbindung miteinander verbunden sind, welche durch die Klebstoffschicht 102 ausgebildet ist. Figur 2 zeigt eine schematische Draufsicht einer beispielhaften Chipkarte (bzw. eines Chipkartenhalbzeugs) 200 mit dem elektronischen Schaltkreis 101 und dem Kartenkörper 103, welche über die durch die Klebstoffschicht 102 ausgebildete Klebstoffverbindung miteinander verbunden sind.

Die in Figur 1 dargestellte Inspektionsvorrichtung 100 umfasst eine Beleuchtungsquelle 105, welche ausgebildet ist, den Kartenkörper 103 zu beleuchten, wie dies in Figur 1 schematisch dargestellt ist. Bei der Beleuchtungsquelle 105 kann es sich beispielsweise um eine diffuse Lichtquelle oder um eine Punklichtquelle handeln.

Die Inspektionsvorrichtung 100 umfasst ferner eine Bildkamera 107, welche ausgebildet ist, eine Bildaufnahme des beleuchteten Kartenkörpers 103 mit dem elektronischen Schaltkreis 101 zu erfassen. Hierzu kann der Kartenkörper 103 zwischen der Beleuchtungsquelle 105 und der Bildkamera 107 angeordnet sein. In dem Fall einer Beleuchtungsquelle 105 in Form einer Punktlichtquelle kann die Punktlichtquelle relativ zu der Bildkamera 107 von dem elektronischen Schaltkreis 101 verdeckt werden. Bei der Bildkamera 107 kann es sich insbesondere um eine Digitalbildkamera handeln.

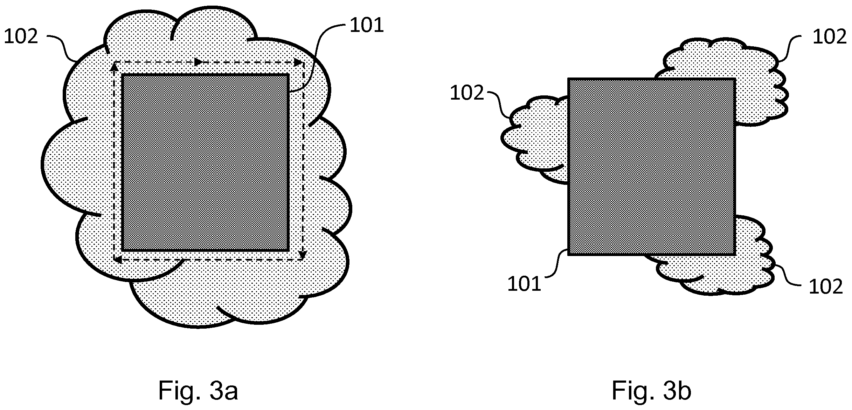

Die Inspektionsvorrichtung 100 umfasst ferner einen Prozessor 109, welcher ausgebildet ist, in der von der Bildkamera 107 erfassten Bildaufnahme einen Verlauf der Klebstoffschicht 102 entlang einer Kontur des elektronischen Schaltkreises 101 zu erfassen und die Klebstoffverbindung anhand des erfassten Verlaufs der Klebstoffschicht 102 zu verifizieren. Der Prozessor 109 kann Teil eines Computers (nicht dargestellt) sein, der ein Display zur Anzeige der von der Bildkamera 107 erfassten und vom Prozessor 109 gegebenenfalls weiter verarbeiteten Bildaufnahme umfassen kann. Zwei beispielhafte von der Bildkamera 107 erfasste und vom Prozessor 109 gegebenenfalls weiter verarbeitete Bildaufnahmen sind schematisch in den Figuren 3a und 3b dargestellt.

Gemäß einer Ausführungsform ist der Prozessor 109 der Inspektionsvorrichtung 100 ausgebildet, die Kontur des elektronischen Schaltkreises 101, insbesondere durch Kantenerkennung oder Mustererkennung, zu erfassen. Die Kontur des elektronischen Schaltkreises 101 lässt sich beispielsweise in den schematischen Darstellungen der Figuren 3a und 3b erkennen.

Gemäß einer Ausführungsform ist der Prozessor 109 der Inspektionsvorrichtung 100 ausgebildet, innerhalb eines Intensitätsbereichs, insbesondere Graustufenbereichs, liegende Bildpixel der Bildaufnahme entlang der Kontur des elektronischen Schaltkreises 101 zu erfassen, um den Verlauf der Klebstoffschicht 102 zu erfassen.

Erfindungsgemäß ist der Prozessor 109 der Inspektionsvorrichtung 100 ausgebildet, in der Bildaufnahme in dem Verlauf der Klebstoffschicht 102 entlang der Kontur des elektronischen Schaltkreises 101 einen geschlossenen Pfad um den elektronischen Schaltkreis 101 herum zu detektieren, und die durch die Klebstoffschicht 102 ausgebildete Klebstoffverbindung bei Vorliegen des geschlossenen Pfades zu verifizieren, oder die durch die Klebstoffschicht 102 ausgebildete Klebstoffverbindung bei Fehlen des geschlossenen Pfades nicht zu verifizieren.

Figur 3a zeigt schematisch eine Bildaufnahme, bei welcher der Prozessor 109 der Inspektionsvorrichtung 100 in dem Verlauf der Klebstoffschicht 102 entlang der Kontur des elektronischen Schaltkreises 101 einen geschlossenen Pfad um den elektronischen Schaltkreis 101 herum detektieren kann. Folglich wird die mit der Bildaufnahme von Figur 3a assoziierte Klebstoffverbindung verifiziert.

Figur 3b zeigt schematisch eine Bildaufnahme, bei welcher der Prozessor 109 der Inspektionsvorrichtung 100 in dem Verlauf der Klebstoffschicht 102 entlang der Kontur des elektronischen Schaltkreises 101 keinen geschlossenen Pfad um den elektronischen Schaltkreis 101 herum detektieren kann. Dies liegt in diesem Fall daran, dass die Klebstoffschicht 102 nur in drei einzelnen Bereichen über den Rand des elektronischen Schaltkreises 101 hinaus ausgetreten ist, so dass die mit der Bildaufnahme von Figur 3b assoziierte Klebstoffverbindung nicht verifiziert werden kann.

Gemäß einer Ausführungsform ist der Prozessor 109 der Inspektionsvorrichtung 100 ausgebildet, in dem Verlauf der Klebstoffschicht 102 entlang der Kontur des elektronischen Schaltkreises 101 einen geschlossenen Pfad in einem vorbestimmten Abstand zur Kontur des elektronischen Schaltkreises 101 zu detektieren, wie dies in Figur 3a angedeutet ist.

Erfindungsgemäß ist die Bildkamera 107 ausgebildet, die Bildaufnahme zu überbelichten, um die Klebstoffschicht 102 in einem vorbestimmten Intensitätsbereich, insbesondere Graustufenbereich, aufzunehmen.

Gemäß einer Ausführungsform ist die Beleuchtungsquelle 105 ausgebildet, den Kartenkörper 103 mit Licht einer vorbestimmten Intensität zu überbelichten, um eine Aufnahme der Klebstoffschicht 102 in einem vorbestimmten Intensitätsbereich, insbesondere Graustufenbereich, durch die Bildkamera 107 zu bewirken.

Mittels einer solchen Überbelichtung durch eine geeignete Ansteuerung der Beleuchtungsquelle 107 (z.B. über die Intensität der Beleuchtungsquelle 107) und/oder der Bildkamera 107 (z.B. über die Belichtungszeit) durch den Prozessor 109 kann die Analyse und Verarbeitung der Bildaufnahme durch den Prozessor 109 effizienter durchgeführt werden. Wie dies in Figur 1 schematisch angedeutet ist, führt eine Überbelichtung zu einer Kontrastverstärkung in der Bildaufnahme zwischen den Pixeln der Bildaufnahme, welche den elektronischen Schaltkreis 101 abbilden, und den Pixeln, welche die Klebstoffschicht 102 abbilden. Die Pixel der Bildaufnahme, die Bereiche des Kartenkörpers 103 außerhalb der Klebstoffsicht 102 abbilden, können durch eine Überbelichtung saturiert werden und somit bei der Auswertung effizient verworfen werden.

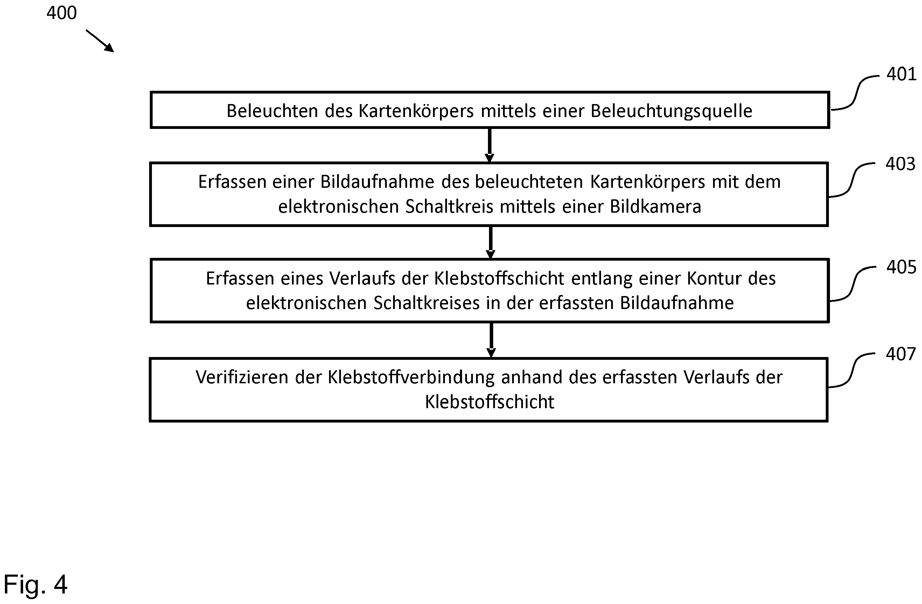

Figur 4 zeigt ein schematisches Diagramm eines Verfahrens 400 zum Verifizieren einer durch eine Klebstoffschicht 102 ausgebildeten Klebstoffverbindung zwischen einem elektronischen Schaltkreis 101 und einem Kartenkörper 103. Das Verfahren 400 umfasst einen Schritt 401 des Beleuchtens des Kartenkörpers 103 mittels einer Beleuchtungsquelle, einen Schritt 403 des Erfassens einer Bildaufnahme des beleuchteten Kartenkörpers 103 mit dem elektronischen Schaltkreis 101 mittels einer Bildkamera 107, einen Schritt 405 des Erfassens eines Verlaufs der Klebstoffschicht 102 entlang einer Kontur des elektronischen Schaltkreises 101 in der erfassten Bildaufnahme sowie einen Schritt 407 des Verifizierens der Klebstoffverbindung anhand des erfassten Verlaufs der Klebstoffschicht 102.

Gemäß einer Ausführungsform umfasst das Verfahren 400 ferner den Schritt des Erfassens der Kontur des elektronischen Schaltkreises 101 in der Bildaufnahme, insbesondere durch Kantenerkennung oder Mustererkennung.

Gemäß einer Ausführungsform umfasst der Schritt 405 des Erfassens des Verlaufs der Klebstoffschicht das Erfassen von innerhalb eines Intensitätsbereichs, insbesondere Graustufenbereichs, liegenden Bildpixeln entlang der Kontur des elektronischen Schaltkreises 101 in der erfassten Bildaufnahme.

Erfindungsgemäß umfasst das Verfahren 400 ferner die Schritte, in dem Verlauf der Klebstoffschicht 102 entlang der Kontur des elektronischen Schaltkreises 101 einen geschlossenen Pfad zu detektieren, und die durch die Klebstoffschicht 102 ausgebildete Klebstoffverbindung bei Vorliegen des geschlossenen Pfades zu verifizieren, oder die durch die Klebstoffschicht 102 ausgebildete Klebstoffverbindung bei Fehlen des geschlossenen Pfades nicht zu verifizieren.

Gemäß einer Ausführungsform wird beim Schritt des Detektierens eines geschlossenen Pfades in dem Verlauf der Klebstoffschicht 102 entlang der Kontur des elektronischen Schaltkreises 101 der geschlossene Pfad in dem Verlauf der Klebstoffschicht 102 entlang der Kontur des elektronischen Schaltkreises 101 in einem vorbestimmten Abstand zur Kontur des elektronischen Schaltkreises 101 detektiert.

Erfindungsgemäß umfasst der Schritt 403 des Erfassens einer Bildaufnahme des beleuchteten Kartenkörpers 103 mit dem elektronischen Schaltkreis 101 mittels der Bildkamera 107 das Überbelichten der Bildaufnahme, um die Klebstoffschicht 102 in einem vorbestimmten Intensitätsbereich, insbesondere Graustufenbereich, aufzunehmen.

Gemäß einer Ausführungsform umfasst der Schritt 401 des Beleuchtens des Kartenkörpers 103 mittels der Beleuchtungsquelle 105 das Überbelichten des Kartenkörpers 103 mit Licht einer vorbestimmten Intensität, um eine Aufnahme der Klebstoffschicht 102 in einem vorbestimmten Intensitätsbereich, insbesondere Graustufenbereich, durch die Bildkamera 107 zu bewirken.

### BEZUGSZEICHENLISTE

- 100: Inspektionsvorrichtung
- 101: elektronischer Schaltkreis
- 102: Klebstoffschicht
- 103: Kartenkörper
- 105: Beleuchtungsquelle
- 107: Bildkamera
- 109: Prozessor

- 200: Chipkarte

- 400: Verfahren zum Verifizieren einer Klebstoffverbindung
- 401: Beleuchten eines Kartenkörpers
- 403: Erfassen einer Bildaufnahme des Kartenkörpers
- 405: Erfassen eines Verlaufs einer Klebstoffschicht
- 407: Verifizieren der Klebstoffverbindung

## Patentansprüche

1. Inspektionsvorrichtung (100) zum Verifizieren einer durch eine Klebstoffschicht (102) ausgebildeten Klebstoffverbindung zwischen einem elektronischen Schaltkreis (101) und einem Kartenkörper (103), mit:
einer Beleuchtungsquelle (105), welche ausgebildet ist, den Kartenkörper (103) zu beleuchten;
einer Bildkamera (107), welche ausgebildet ist, eine Bildaufnahme des beleuchteten Kartenkörpers (103) mit dem elektronischen Schaltkreis (101) zu erfassen; und
einem Prozessor (109), welcher ausgebildet ist, in der erfassten Bildaufnahme einen Verlauf der Klebstoffschicht (102) entlang einer Kontur des elektronischen Schaltkreises (101) zu erfassen und die Klebstoffverbindung anhand des erfassten Verlaufs der Klebstoffschicht (102) zu verifizieren, **dadurch gekennzeichnet, dass**
der Prozessor (109) ausgebildet ist, in dem Verlauf der Klebstoffschicht (102) entlang der Kontur des elektronischen Schaltkreises (101) einen geschlossenen Pfad zu detektieren, und die durch die Klebstoffschicht (102) ausgebildete Klebstoffverbindung bei Vorliegen des geschlossenen Pfades zu verifizieren, oder die durch die Klebstoffschicht (102) ausgebildete Klebstoffverbindung bei Fehlen des geschlossenen Pfades nicht zu verifizieren, wobei die Bildkamera (107) ausgebildet ist, die Bildaufnahme zu überbelichten, um die Klebstoffschicht (102) in einem vorbestimmten Intensitätsbereich, insbesondere Graustufenbereich, aufzunehmen.

2. Inspektionsvorrichtung (100) nach Anspruch 1, wobei der Prozessor (109) ausgebildet ist, die Kontur des elektronischen Schaltkreises (101), insbesondere durch Kantenerkennung oder Mustererkennung, zu erfassen.

3. Inspektionsvorrichtung (100) nach Anspruch 1 oder 2, wobei der Prozessor (109) ausgebildet ist, innerhalb eines Intensitätsbereichs, insbesondere Graustufenbereichs, liegende Bildpixel entlang der Kontur des elektronischen Schaltkreises (101) zu erfassen, um den Verlauf der Klebstoffschicht zu erfassen.

4. Inspektionsvorrichtung (100) nach einem der vorstehenden Ansprüche, wobei der Prozessor ausgebildet ist, in dem Verlauf der Klebstoffschicht entlang der Kontur des elektronischen Schaltkreises einen geschlossenen Pfad in einem vorbestimmten Abstand zur Kontur des elektronischen Schaltkreises zu detektieren.

5. Inspektionsvorrichtung (100) nach einem der vorstehenden Ansprüche, wobei die Beleuchtungsquelle (105) ausgebildet ist, den Kartenkörper (103) mit Licht einer vorbestimmten Intensität zu überbelichten, um eine Aufnahme der Klebstoffschicht (102) in einem vorbestimmten Intensitätsbereich, insbesondere Graustufenbereich, durch die Bildkamera (107) zu bewirken.

6. Verfahren (400) zum Verifizieren einer durch eine Klebstoffschicht (102) ausgebildeten Klebstoffverbindung zwischen einem elektronischen Schaltkreis (101) und einem Kartenkörper (103), mit:
Beleuchten (401) des Kartenkörpers (103) mittels einer Beleuchtungsquelle (105);
Erfassen (403) einer Bildaufnahme des beleuchteten Kartenkörpers (103) mit dem elektronischen Schaltkreis (101) mittels einer Bildkamera (107);
Erfassen (405) eines Verlaufs der Klebstoffschicht (102) entlang einer Kontur des elektronischen Schaltkreises (101) in der erfassten Bildaufnahme; und
Verifizieren (407) der Klebstoffverbindung anhand des erfassten Verlaufs der Klebstoffschicht (102), **dadurch gekennzeichnet, dass**
das Verfahren (400) ferner die Schritte umfasst, in dem Verlauf der Klebstoffschicht (102) entlang der Kontur des elektronischen Schaltkreises (101) einen geschlossenen Pfad zu detektieren, und die durch die Klebstoffschicht (102) ausgebildete Klebstoffverbindung bei Vorliegen des geschlossenen Pfades zu verifizieren, oder die durch die Klebstoffschicht (102) ausgebildete Klebstoffverbindung bei Fehlen des geschlossenen Pfades nicht zu verifizieren, wobei der Schritt des Erfassens (403) einer Bildaufnahme des beleuchteten Kartenkörpers (103) mit dem elektronischen Schaltkreis (101) mittels der Bildkamera (107) das Überbelichten der Bildaufnahme umfasst, um die Klebstoffschicht (102) in einem vorbestimmten Intensitätsbereich, insbesondere Graustufenbereich, aufzunehmen.

7. Verfahren (400) nach Anspruch 6, wobei das Verfahren (400) ferner den Schritt des Erfassens der Kontur des elektronischen Schaltkreises (101) in der Bildaufnahme, insbesondere durch Kantenerkennung oder Mustererkennung, umfasst.

8. Verfahren (400) nach Anspruch 6 oder 7, wobei der Schritt des Erfassens (405) des Verlaufs der Klebstoffschicht (102) das Erfassen von innerhalb eines Intensitätsbereichs, insbesondere Graustufenbereichs, liegenden Bildpixeln entlang der Kontur des elektronischen Schaltkreises (101) umfasst.

9. Verfahren nach einem der Ansprüche 6 bis 8, wobei beim Schritt des Detektierens eines geschlossenen Pfades in dem Verlauf der Klebstoffschicht (102) entlang der Kontur des elektronischen Schaltkreises (101) der geschlossene Pfad in dem Verlauf der Klebstoffschicht (102) entlang der Kontur des elektronischen Schaltkreises (101) in einem vorbestimmten Abstand zur Kontur des elektronischen Schaltkreises (101) detektiert wird.

10. Verfahren (400) nach einem der Ansprüche 6 bis 9, wobei der Schritt des Beleuchtens (401) des Kartenkörpers (103) mittels der Beleuchtungsquelle (105) das Überbelichten des Kartenkörpers (103) mit Licht einer vorbestimmten Intensität umfasst, um eine Aufnahme der Klebstoffschicht (102) in einem vorbestimmten Intensitätsbereich, insbesondere Graustufenbereich, durch die Bildkamera (107) zu bewirken.

## Claims

1. An inspection device (100) for verifying an adhesive bonding formed by an adhesive layer (102) between an electronic circuit (101) and a card body (103), the inspection device comprising:
an illumination source (105) configured to illuminate the card body (103);
an image camera (107) which is configured to capture an image acquisition of the illuminated card body (103) with the electronic circuit (101); and
a processor (109) which is configured to detect a course of the adhesive layer (102) along a contour of the electronic circuit (101) in the image acquisition and to verify the adhesive bonding on the basis of the detected course of the adhesive layer (102), the inspection device **characterized in that**
the processor (109) is configured to detect a closed path in the course of the adhesive layer (102) along the contour of the electronic circuit (101) and to verify the adhesive bonding formed by the adhesive layer (102) if the closed path is present or to not verify the adhesive bonding formed by the adhesive layer (102) if the closed path is absent, wherein the image camera (107) is configured to overexpose the image acquisition in order to capture the adhesive layer (102) in a predetermined intensity range, in particular a grayscale range.

2. The inspection device (100) according to claim 1, wherein the processor (109) is configured to detect the contour of the electronic circuit (101), in particular configured to detect the contour of the electronic circuit (101) by edge detection or pattern recognition.

3. The inspection device (100) according to claim 1 or 2, wherein the processor (109) is configured to detect image pixels situated within an intensity range, in particular a grayscale range, along the contour of the electronic circuit (101) in order to detect the course of the adhesive layer.

4. The inspection device (100) according to one of the preceding claims, wherein the processor is configured to detect a closed path in the course of the adhesive layer along the contour of the electronic circuit at a predetermined distance to the contour of the electronic circuit.

5. The inspection device (100) according to one of the preceding claims, wherein the illumination source (105) is configured to overexpose the card body (103) with light of a predetermined intensity in order to effect an image acquisition of the adhesive layer (102) by the image camera (107) in a predetermined intensity range, in particular a gray scale range.

6. A method (400) for verifying an adhesive bonding formed by an adhesive layer (102) between an electronic circuit (101) and a card body (103), the method comprising:
illuminating (401) the card body (103) by means of an illumination source (105);
capturing (403) an image acquisition of the illuminated card body (103) with the electronic circuit (101) by means of an image camera (107);
detecting (405) a course of the adhesive layer (102) along a contour of the electronic circuit (101) in the captured image acquisition; and
verifying (407) the adhesive bonding on the basis of the detected course of the adhesive layer (102), the method **characterized in that**
the method (400) further comprises the steps of detecting a closed path in the course of the adhesive layer (102) along the contour of the electronic circuit (101) and verifying the adhesive bonding formed by the adhesive layer (102) if the closed path is present or not verifying the adhesive bonding formed by the adhesive layer (102) if the closed path is absent, wherein the step of capturing (403) an image acquisition of the illuminated card body (103) with the electronic circuit (101) by means of the image camera (107) comprises the overexposing of the image acquisition in order to capture the adhesive layer (102) in a predetermined intensity range, in particular a grayscale range.

7. The method (400) according to claim 6, wherein the method (400) further comprises the step of detecting the contour of the electronic circuit (101) in the image acquisition, in particular detecting the contour of the electronic circuit (101) by edge detection or pattern detection.

8. The method (400) according to claim 6 or 7, wherein the step of detecting (405) the course of the adhesive layer (102) comprises detecting image pixels situated within an intensity range, in particular a gray scale range, along the contour of the electronic circuit (101).

9. The method according to one of claims 6 to 8, wherein in the step of detecting a closed path in the course of the adhesive layer (102) along the contour of the electronic circuit (101), the closed path in the course of the adhesive layer (102) along the contour of the electronic circuit (101) is detected at a predetermined distance to the contour of the electronic circuit (101).

10. The method (400) according to one of claims 6 to 9, wherein the step of illuminating (401) the card body (103) by means of the illumination source (105) comprises overexposing the card body (103) with light of a predetermined intensity in order to effect an image acquisition of the adhesive layer (102) by the image camera (107) in a predetermined intensity range, in particular a gray scale range.

## Revendications

1. Dispositif d'inspection (100) pour vérifier un assemblage par adhésif, réalisé par une couche d'adhésif (102), entre un circuit électronique (101) et un corps de carte (103), comprenant :
une source d'éclairage (105) qui est réalisée pour éclairer le corps de carte (103) ;
une caméra d'imagerie (107) qui est réalisée pour capturer une prise de vue du corps de carte éclairé (103) muni du circuit électronique (101) ; et
un processeur (109) qui est réalisé pour capturer sur la prise de vue capturée un tracé de la couche d'adhésif (102) le long d'un contour du circuit électronique (101), et pour vérifier l'assemblage par adhésif à l'aide du tracé capturé de la couche d'adhésif (102),
**caractérisé en ce que** le processeur (109) est réalisé pour détecter un chemin fermé sur le tracé de la couche d'adhésif (102) le long du contour du circuit électronique (101), et pour vérifier l'assemblage par adhésif réalisé par la couche d'adhésif (102) en présence du chemin fermé, ou pour ne pas vérifier l'assemblage par adhésif réalisé par la couche d'adhésif (102) en l'absence du chemin fermé, la caméra d'imagerie (107) étant réalisée pour surexposer la prise de vue afin de saisir la couche d'adhésif (102) dans une plage d'intensité prédéterminée, en particulier une plage de niveaux de gris.

2. Dispositif d'inspection (100) selon la revendication 1, dans lequel le processeur (109) est réalisé pour capturer le contour du circuit électronique (101), en particulier par une détection de limites ou une reconnaissance de formes.

3. Dispositif d'inspection (100) selon la revendication 1 ou 2, dans lequel le processeur (109) est réalisé pour capturer des pixels d'image situés à l'intérieur d'une plage d'intensité, en particulier d'une plage de niveaux de gris, le long du contour du circuit électronique (101) pour capturer le tracé de la couche d'adhésif.

4. Dispositif d'inspection (100) selon l'une quelconque des revendications précédentes, dans lequel le processeur est réalisé pour détecter un chemin fermé sur le tracé de la couche d'adhésif le long du contour du circuit électronique à une distance prédéterminée du contour du circuit électronique.

5. Dispositif d'inspection (100) selon l'une quelconque des revendications précédentes, dans lequel la source d'éclairage (105) est réalisée pour surexposer le corps de carte (103) avec une lumière d'une intensité prédéterminée afin de provoquer une prise de vue de la couche d'adhésif (102) dans une plage d'intensité prédéterminée, en particulier une plage de niveaux de gris, par la caméra d'imagerie (107) .

6. Procédé (400) de vérification d'un assemblage par adhésif réalisé par une couche d'adhésif (102) entre un circuit électronique (101) et un corps de carte (103), comprenant les étapes consistant à :
éclairer (401) le corps de carte (103) au moyen d'une source d'éclairage (105) ;
capturer (403) une prise de vue du corps de carte éclairé (103) muni du circuit électronique (101) au moyen d'une caméra d'imagerie (107) ;
capturer (405) un tracé de la couche d'adhésif (102) le long d'un contour du circuit électronique (101) sur la prise de vue capturée ; et
vérifier (407) l'assemblage par adhésif à l'aide du tracé capturé de la couche d'adhésif (102),
**caractérisé en ce que** le procédé (400) comprend en outre les étapes consistant à détecter un chemin fermé sur le tracé de la couche d'adhésif (102) le long du contour du circuit électronique (101), et vérifier l'assemblage par adhésif réalisé par la couche d'adhésif (102) en présence du chemin fermé, ou ne pas vérifier l'assemblage par adhésif réalisé par la couche d'adhésif (102) en l'absence du chemin fermé, l'étape de capture (403) d'une prise de vue du corps de carte éclairé (103) muni du circuit électronique (101) au moyen de la caméra d'imagerie (107) comprenant la surexposition de la prise de vue afin de saisir la couche d'adhésif (102) dans une plage d'intensité prédéterminée, en particulier une plage de niveaux de gris.

7. Procédé (400) selon la revendication 6, dans lequel le procédé (400) comprend en outre l'étape de capture du contour du circuit électronique (101) sur la prise de vue, en particulier par une détection de limites ou une reconnaissance de formes.

8. Procédé (400) selon la revendication 6 ou 7, dans lequel l'étape de capture (405) du tracé de la couche d'adhésif (102) comprend la capture de pixels d'image situés à l'intérieur d'une plage d'intensité, en particulier d'une plage de niveaux de gris, le long du contour du circuit électronique (101).

9. Procédé selon l'une quelconque des revendications 6 à 8, dans lequel, à l'étape de la détection d'un chemin fermé sur le tracé de la couche d'adhésif (102) le long du contour du circuit électronique (101), le chemin fermé sur le tracé de la couche d'adhésif (102) le long du contour du circuit électronique (101) est détecté à une distance prédéterminée du contour du circuit électronique (101).

10. Procédé (400) selon l'une quelconque des revendications 6 à 9, dans lequel l'étape d'éclairage (401) du corps de carte (103) comprend la surexposition, au moyen de la source d'éclairage (105), du corps de carte (103) avec une lumière d'une intensité prédéterminée afin de provoquer une prise de vue de la couche d'adhésif (102) dans une plage d'intensité prédéterminée, en particulier une plage de niveaux de gris, par la caméra d'imagerie (107).
